# EUROPÄISCHE PATENTSCHRIFT

(11) **EP 1 188 491 B1**
(45) Veröffentlichungstag und Bekanntmachung des Hinweises auf die Patenterteilung: **02.01.2004**
(21) Anmeldenummer: 00120091.4
(22) Anmeldetag: 15.09.2000
(51) Int. Cl.: B07B 13/11, B03B 9/06, B29B 17/02

(54) **Verfahren zum Aussortieren eines Kunststoffgemisches aus einem Abfallgemisch und Abfallsortieranlage**
Process for sorting a plastics mixture out of a waste mixture and waste sorting installation
Procédé pour séparer un mélange de plastiques d'un mélange de déchets et dispositif de tri de déchets

(43) Veröffentlichungstag der Anmeldung: 20.03.2002
(73) Patentinhaber: RWE Umwelt AG, 41747 Viersen (DE); Stadler Anlagenbau GmbH, 88361 Altshausen (DE)
(72) Erfinder: Stadler, Wilhelm, D-88361 Altshausen (DE); Hüskens, Jürgen, D-41748 Viersen (DE); Dell, Thomas, D-52428 Jülich (DE)
(74) Vertreter: COHAUSZ & FLORACK

(56) Entgegenhaltungen:
- EP-A- 0 916 408
- DE-A- 19 753 203
- GB-A- 2 109 707

## Beschreibung

Die Erfindung betrifft ein Verfahren zum Aussortieren eines Kunststoffgemisches aus einem Abfallgemisch in einer Abfallsortieranlage sowie eine entsprechende Sortieranlage.

In Deutschland werden derzeit Leichtverpackungen separat zum sonstigen Hausmüll gesammelt, um die in den Leichtverpackungen enthaltenen Stoffe einer Wiederverwertung zuzuführen. Diese Art der Abfalltrennung wird Duales System bezeichnet. Beim Sortieren des Leichtverpackungsmülls ist es, um eine Sortenreinheit der einzelnen Materialien zu erreichen, notwendig, verschiedenste Techniken einzusetzen, um die Materialien voneinander zu trennen. So gibt es magnetisch wirkende Metallabscheider zum Abtrennen von magnetischen Metallen, Abscheider für sonstige Metalle, Windsichter zum Trennen von schweren und leichten Fraktionen, Siebe in unterschiedlichsten Formen zum Trennen unterschiedlicher Korngrößen sowie auch Sichtungsstrecken, bei denen bestimmte Abfallobjekte gezielt manuell aussortiert werden.

Bei der Aufbereitung des Abfalls und insbesondere des Leichtverpackungsmülls ist es von besonderem Interesse, Kunststoffobjekte nach ihrer Kunststoffart, also Polyethylen (PE), Polypropylen (PP), Polystyrol (PS) oder Polyethylenteraphthalat (PET) zu trennen. Dieses geschieht im Stand der Technik mittels einer automatisch sortierenden Vorrichtung, die mittels Infrarot-Spektroskopie unterschiedliche Kunststoffarten erkennt und durch gezieltes Abtrennen der Objekte einer Kunststoffart eine große Reinheit in einzelnen Kunststofffraktionen erreicht. Dabei erfolgt das Erkennen der Kunststoffobjekte mittels optischer Hilfsmittel, während das Austragen beispielsweise mit Hilfe von Druckluftblasvorrichtungen erfolgt. Somit lassen sich einzelne Kunststofffraktionen aus dem Abfall und insbesondere aus dem Leichtverpackungsmüll abtrennen, die jeweils im wesentlichen Objekte einer der oben genannten Kunststoffarten enthält.

Weiterhin ist aus dem Stand der Technik ein sogenannter Ballistikseparator bekannt, der in der Abfallaufbereitung für die Trennung verschiedener Materialien eingesetzt wird. Ein Ballistikseparator besteht aus einem oder mehreren Wurfpaddeln, die unter einem Neigungswinkel gegenüber der Horizontalen angeordnet sind und mittels eines geeigneten Antriebes zu einer kreisförmigen Bewegung angetrieben werden, wobei die Ebene der Kreisbewegung in Richtung der Längserstreckung jedes Wurfpaddels ausgerichtet ist. Ein Ballistikseparator nutzt für eine Trennung unterschiedlicher Materialien die physikalisch bedingten Unterschiede der dynamisch erregten Flugkurven, wobei das unterschiedliche ballistische Verhalten verschieden großer und verschieden schwerer Materialien für eine Auftrennung in Leicht- und Schwerfraktionen bewirkt.

Daher weist ein Ballistikseparator gegenüber einer Windsichtung den Vorteil auf, dass nicht nur das Gewicht, sondern auch die Form des zu separierenden Objektes als Unterscheidungsmerkmal verwendet wird. Wenn zudem die Wurfpaddeln als Sieb ausgebildet sind und eine Trennung in große und kleine Objekte ermöglicht, können mit einem Ballistikseparator in einem Arbeitsgang eine Trennung eines Materialgemisches nach den Kriterien flach/rund, schwer/leicht und groß/klein erfolgen.

Aus der EP-A2-0 916 408 sind ein Verfahren und eine Vorrichtung zur Aufbereitung von Gemischen von Haushaltsabfällen und/oder Verpackungsabfällen bekannt, bei dem bereits Getränkekartons aus dem Abfallgemisch aussortiert werden. Mit dieser Vorrichtung lassen sich jedoch nur aluminiumbeschichtete Getränkeverbundkartons mittels eines NE-Scheiders aussortieren, so dass ein Teil der Getränkekartons in den nachgeschalteten Windsichter gelangt. Erst nach dem Durchlauf des Windsichters erfolgt eine Abtrennung der restlichen Getränkekartons aus dem Materialstrom. Es ist klar, dass dieses bekannte Verfahren und die bekannte Vorrichtung dahingehend nachteilig sind, dass die zunächst im Abfallstrom verbleibenden Getränkekartons den Windsichter ohne technische Notwendigkeit durchlaufen, so dass hier eine negative Auswirkung auf die Trennungsqualität im Windsichter nicht ausgeschlossen werden kann.

Eine andere bekannte Anlage zum Abtrennen unterschiedlich schwerer Objekte in einem Abfallstrom ist in der GB-A-2 109 707 beschrieben. Hier wird ein geneigt angeordnetes und Ausnehmungen aufweisendes Schwingsieb verwendet, um bei einer gleichzeitigen Siebung schwere von leichteren Objekten zu trennen. Die Beschreibung dieser bekannten Vorrichtung enthält jedoch nichts über die Problematik von Getränkekartons in Abfallströmen.

Aus der DE-A1-197 53 203 sind ein Verfahren und eine Vorrichtung zur Aufbereitung von Verpackungsabfällen bekannt. Bei diesem bekannten Verfahren, das auf die Anmelderin der vorliegenden Patentanmeldung zurückgeht, werden bereits Abfallfraktionen aus Kunststoffobjekten und Getränkekartons aus einem Abfallgemisch aussortiert, indem unterschiedliche Trennverfahren zum Einsatz kommen. Entsprechende Vorrichtungen umfassen Magneten zur Entfernung von Eisen bzw. eisenenthaltenden Materialien, Nichteisenmetallscheider zur Abtrennung von Nichteisenmetallen bzw. solche enthaltenden Verbundmaterialien, Siebe mit unterschiedlichen Sieblochweiten und Schwerkraft-Trennvorrichtungen.

In dem beschriebenen Stand der Technik stellt es trotz Anwendung unterschiedlicher Sortiermethoden ein Problem dar, dass Getränkekartons in die Kunststofffraktionen mit hineingelangen. Denn Getränkekartons bestehen in der Regel aus einem Verbund aus einer Kunststoffart wie Polyethylen (PE) und Pappe. Somit sind Getränkekartons im weiteren Sinne Störstoffe in den aussortierten Kunststoffraktionen, da ein Anteil Papier die Reinheit der Kunststofffraktion herabsetzt.

Weitere Störstoffe werden von anderen Verbundmaterialien gebildet, wobei insbesondere Verbunde aus Metallen wie Aluminium und einer Kunststoffart wie Polyethylen (PE) im Abfallgemisch enthalten sind. Als Beispiele seien Zahnpastatuben und Lebensmitteltüten genannt.

Schließlich besteht ein Problem darin, dass die bei einem Aussortieren einzelner Kunststoffobjekte eingesetzten Druckluftblasvorrichtungen durch ein Zerstäuben von flüssigen oder zähflüssigen Materialien wie Lebensmittelresten, die an den Kunststoffobjekten anhaften, die Sortiereinrichtung erheblich verschmutzen.

Der Erfindung liegt das technische Problem zugrunde, das Verfahren und die Abfallsortieranlage derart auszugestalten und weiterzubilden, dass ein im wesentlichen aus Kunststoffobjekten bestehendes Kunststoffgemisch mit geringen Anteilen an Störstoffen aussortiert werden kann.

Das zuvor aufgezeigte technische Problem wird erfindungsgemäß durch ein Verfahren zum Aussortieren eines Kunststoffgemisches aus einem Abfallgemisch in einer Abfallsortieranlage nach Anspruch 1 gelöst, bei dem mittels einer oder mehrerer Sortiereinrichtungen wie Siebstufen, Windsichtern, Vibrationsrinnen oder magnetischen Einrichtungen Kunststoffobjekte, Getränkekartons und ggf. Metall enthaltende Abfallobjekte aufweisende Abfallfraktion aus einem Abfallgemisch aussortiert wird, bei dem mittels einer optischen Sortiereinrichtung Getränkekartons und ggf. mittels einer Sortiereinrichtung für Metall Metall enthaltende Abfallobjekte aus der Abfallfraktion aussortiert werden und bei dem aus der um die Getränkekartons reduzierten Abfallfraktion das Kunststoffgemisch mit Hilfe eines Ballistikseparators als Schwerfraktion abgetrennt wird.

Erfindungsgemäß ist also erkannt worden, dass der Anteil der Störstoffe in Form von Getränkekartons durch den kombinierten Einsatz einer Sortiereinrichtung für Getränkekartons bzw. Metall enthaltende Abfallobjekte und einem Ballistikseparator deutlich gesenkt werden kann. In der Sortiereinrichtung werden die Getränkekartons insbesondere mit Hilfe optischer Verfahren und druckluftbetriebenen Austragvorrichtungen aus dem Abfallgemisch aussortiert, die dann einer weiteren Verwertung zugeführt werden können. Dabei werden beispielsweise die Abfallobjekte mit Infrarotlicht bestrahlt und die reflektierenden Spektren aufgenommen. Für jede Kunststoffart aber auch für Verbundwerkstoffe aus einer Kunststoffart und Papier sind die aufgenommenen Spektren charakteristisch und dienen als Unterscheidungskriterium.

Die auf den Ballistikseparator aufgebrachte Abfallfraktion wird dann mittels der Wurfpaddel in eine weitere Störstoffe auch aus Kunststoffobjekten bestehen, enthaltende Leichtfraktion und die auszusortierenden Kunststoffobjekte aufweisende Schwerfraktion aufgespalten. Die Leichtfraktion enthält dabei auch leichte Kunststoffobjekte wie beispielsweise Folien oder Schaumstoffe.

Da der Ballistikseparator Getränkekartons nicht eindeutig trennen kann und somit ein erheblicher Anteil der Getränkekartons in der Schwerfraktion enthalten sein würde, besteht der Vorteil der Erfindung zumindest darin, dass vor dem Ballistikseparator die Getränkekartons aussortiert werden. Die vom Ballistikseparator abgetrennte Schwerfraktion stellt somit eine im wesentlichen von Getränkekartons und von den Störstoffen in der Leichtfraktion befreite Abfallfraktion dar.

Gemäß der vorliegenden Erfindung werden vor dem Auftragen der Abfallfraktion auf den Ballistikseparator ggf. auch Metall enthaltende Abfallobjekte aussortiert.
Insbesondere werden dabei Abfallobjekte aus Verbundmaterialien aus zumindest einem Teil Metall wie Aluminium aussortiert. Dadurch werden die zuvor beschriebenen Störstoffe wie Zahnpastatuben und Lebensmittelverpackungen dem Abfallstrom vor dem Aufbringen auf den Ballistikseparator entnommen, die durch den Ballistikseparator nicht eindeutig in die Leichtfraktion abgetrennt würden. Die Sortiereinrichtung scheidet dabei mittels permanenter Magnetfelder magnetische Metalle und mittels Wechselmagnetfelder nicht magnetische Metalle in bekannter Weise ab.

Bei einer Kombination der Sortiereinrichtung für Getränkekartons mit einer Sortiereinrichtung für Metall enthaltene Abfallobjekte werden beide vor dem Ballistikseparator vom Abfallgemisch durchlaufen. Somit werden beide vorteilhafte Wirkungen kombiniert, um eine erheblichen Reduzierung der Störstoffe in der Kunststofffraktion zu erreichen. Dabei ist die Reihenfolge prinzipiell nicht vorgegeben, aber eine Anordnung der Sortierungseinrichtung für Metall vor der Sortierungseinrichtung für Getränkekartons ist bevorzugt.

Weiterhin ist es bevorzugt, dass die mittels des Ballistikseparators aussortierte Leichtfraktion einer weiteren Verwertung zugeführt wird. Dort können die verschiedenen Störstoffe zumindest teilweise abgetrennt werden, die sich trotz ihrer Eigenschaft als Verbundwerkstoff für eine Wiederverwendung oder Aufbereitung eignen.

Gemäß einer weiteren Lehre der vorliegenden Erfindung wird eine Kleinfraktion mit Hilfe des Ballistikseparators aus dem Abfallgemisch aussortiert. Dazu weist der mindestens eine Wurfpaddel eine Lochung auf, durch die ein intensives Sieben der aufgebrachten Abfallfraktion erfolgt. Insbesondere werden durch die starke Bewegung des Wurfpaddels an den Abfallobjekten anhaftende flüssige oder zähflüssige Stoffe wie Lebensmittelreste während des Aussortierens der Schwer- und Leichtfraktion effektiv abgetrennt. Dadurch wird eine erheblich geringere Verschmutzung der weiteren Sortiereinrichtungen zum Aussortieren einzelner Kunststofffraktionen erreicht, die mit druckluftbetriebenen Austragsvorrichtungen arbeiten. Die Effektivität des Siebvorgangs ist dabei erheblich besser als bei bisher angewandten Trommelsieben.

Weiterhin können einzelne Kunststofffraktionen aus dem Kunststoffgemisch nach einem Durchlaufen des Ballistikseparators mit Hilfe separater Sortiereinrichtungen aussortiert werden. Dabei können insbesondere Kunststofffraktionen im wesentlichen bestehend aus Objekten aus der Kunststoffart Polyethylen (PE), Polypropylen (PP), Polystyrol (PS) oder Polyethylenteraphthalat (PET) aussortiert werden.

Im folgenden wird die Erfindung anhand einer aus Leichtverpackungen gewonnenen Kunststofffraktion beschrieben, die aus dem Dualen System der Abfalltrennung resultiert, das in Deutschland angewendet wird. Dieses ist jedoch nicht beschränkend zu verstehen. Denn es ist prinzipiell auch möglich, aus einem sowohl Hausmüll als auch Leichtverpackungen und andere Abfallarten aufweisenden Gemisch das zu sortierende Abfallgemisch herauszusortieren.

Das oben aufgezeigte technische Problem wird auch durch eine Abfallsortieranlage mit den Merkmalen der Ansprüche 7 oder 8 gelöst, die im folgenden näher erläutert werden. Dabei wird auf die beigefügte Zeichnung bezug genommen. In dieser zeigen
- Fig.1: ein Blockdiagramm zur Darstellung des Ablaufes des Verfahrens zum Aussortieren eines Kunststoffgemisches aus einem Abfallgemisch in einer Abfallsortieranlage gemäß einer ersten Ausgestaltung der vorliegenden Erfindung,
- Fig. 2: ein Blockdiagramm zur Darstellung des Ablaufes des Verfahrens zum Aussortieren eines Kunststoffgemisches aus einem Abfallgemisch in einer Abfallsortieranlage gemäß einer zweiten Ausgestaltung der vorliegenden Erfindung,
- Fig. 3: ein Blockdiagramm entsprechend der Figuren 1 und 2 mit einer Kombination beider Ausgestaltungen des erfindungsgemäßen Verfahrens und
- Fig. 4: eine schematische Darstellung eines Teils eines Ballistikseparators.

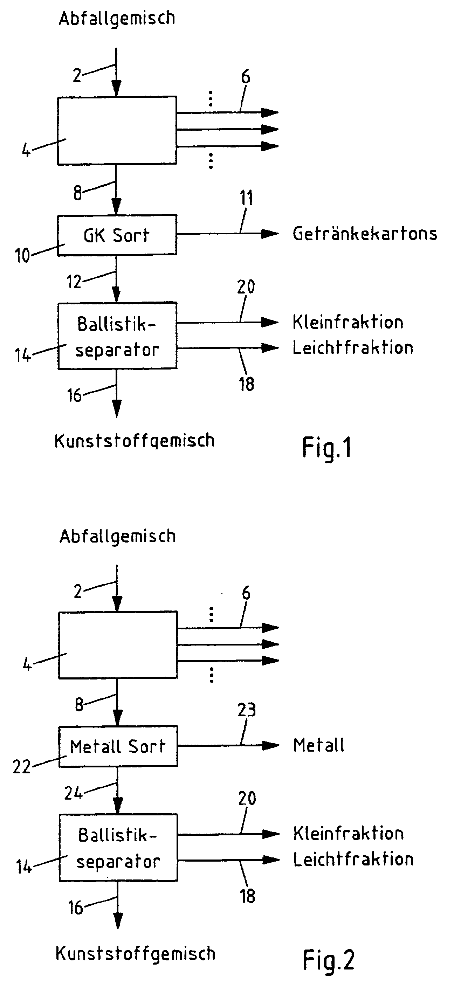

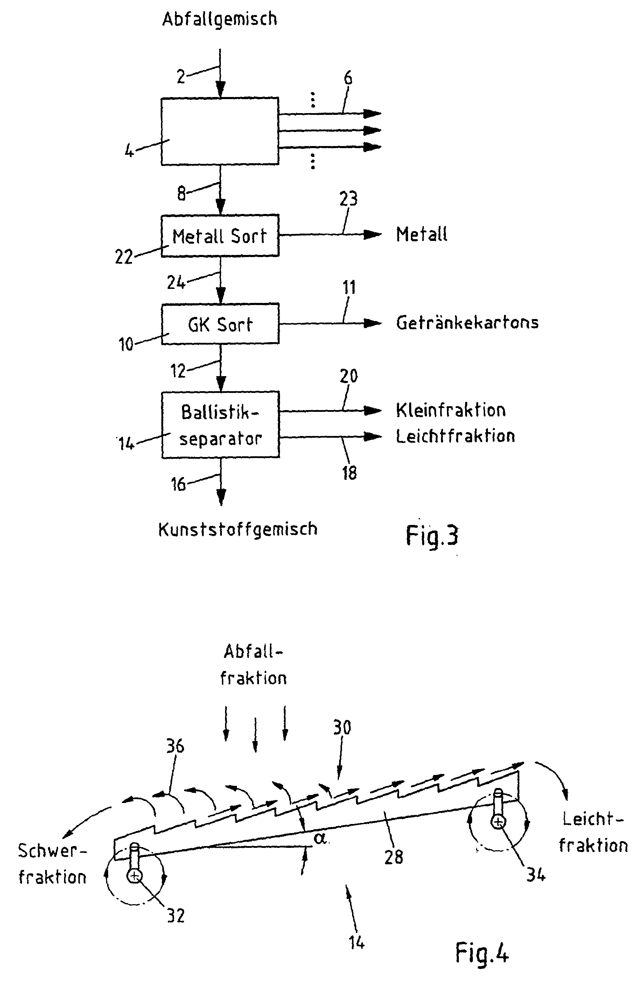

Fig. 1 zeigt in Form eines Blockdiagramms den Ablauf des erfindungsgemäßen Verfahrens zum Aussortieren eines Kunststoffgemisches aus einem Abfallgemisch in einer Abfallsortieranlage gemäß einer ersten Ausgestaltung. In diesem Blockdiagramm, wie auch in den in den Fig. 2 und 3 dargestellten Blockdiagrammen, werden verschiedene Transportmittel mit Pfeilen dargestellt, die das Abfallgemisch oder Teile davon zwischen verschiedenen Sortiereinrichtungen transportiert.

Gemäß Fig. 1 wird ein Abfallgemisch mit einem Transportmittel 2 zu einer Mehrzahl von verschiedenen Sortiereinrichtungen transportiert, die in ihrer Gesamtheit mit dem Bezugszeichen 4 gekennzeichnet sind. Aus dem Abfallgemisch werden beispielsweise mit Hilfe von Siebstufen, Windsichtern, Vibrationsrinnen und magnetischen Einrichtungen eine Mehrzahl von verschiedenen Abfallfraktionen aus dem Abfallgemisch abgetrennt, wie mit den Pfeilen 6 sechs dargestellt ist. Als Ergebnis der Sortierung wird eine zumindest teilweise von anderen Störstoffen befreite, Kunststoffobjekte und Getränkekartons aufweisende Abfallfraktion erhalten, die mit dem Transportmittel 8 einer optischen Sortiereinrichtung 10 zugeleitet wird, die aus der Abfallfraktion Getränkekartons (GK) abtrennt. Hierbei werden optische Verfahren angewandt, mit denen Verbundwerkstoffe aus einer Kunststoffart und Papier erkannt und aus der Abfallfraktion aussortiert werden. Die aussortierten Getränkekartons werden mittels Transportmittel 11 einer weiteren Sortierung und/oder Wiederverwertung zugeführt, während die weitgehend von Getränkekartons gereinigte Abfallfraktion mit Hilfe von Transportmitteln 12 einem Ballistikseparator 14 zugeführt wird.

Wie weiter unten mit Bezug auf Fig. 4 näher erläutert wird, ermöglicht der Ballistikseparator 14 eine Auftrennung der aufgebrachten Abfallfraktion in eine Schwerfraktion, eine Leichtfraktion und eine Kleinfraktion. Die Schwerfraktion, die auch als Kunststoffgemisch bezeichnet werden kann, enthält im wesentlichen Kunststoffobjekte, die mittels Transportmitteln 16 einer weiteren Sortierung in Kunststofffraktionen jeweils einer Kunststoffart zugeführt. Die Leichtfraktion, die vom Ballistikseparator 14 abgetrennt worden ist, enthält im wesentlichen leichte und/oder flächige Objekte wie Papier, Folien, Teile von Hausmüll, Gewebe und andere Materialien, die durch die vorhergehend durchlaufenen Sortiereinrichtungen 4 und 10 nicht aussortiert werden konnten. Die Leichtfraktion wird mittels der Transportmittel 18 einer weiteren Verarbeitung zugeführt. Ebenso ist es möglich, mit einem Balistikseparator 14 eine Kleinfraktion mittels einer Sieblochung vorgegebener Größe abzutrennen. Die Kleinfraktion wird dann mittels Transportmitteln 20 einer weiteren Verwertung zugeführt.

Fig. 2 zeigt eine weitere erfindungsgemäße Ausgestaltung einer Abfallsortieranlage, wobei gleiche Bezugszeichen, gleiche Bestandteile darstellen, wie sie anhand von Fig. 1 beschrieben worden sind.

Bei der in Fig. 2 dargestellten Ausführungsform wird das Abfallgemisch, nachdem es die verschiedenen Sortiereinrichtungen 4 durchlaufen hat, mittels der Transportmittel 8 eine Sortiereinrichtung 22 zum Abtrennen von Metall enthaltenden Objekten zugeleitet. In dieser werden mittels permanenter Magnetfelder oder Wechselmagnetfelder magnetische oder nichtmagnetische Metalle der Abfallfraktion entzogen. Insbesondere können damit Aluminium enthaltene Verbundmaterialien aussortiert werden, wie sie beispielsweise in Form von Zahnpastatuben und Lebensmittelverpackungen existieren. Die aussortieren Objekte werden dann mittels Transportmitteln 23 einer weiteren Verarbeitung zugeführt.

Die von dem Metall enthaltenden Objekten befreite Abfallfraktion wird anschließend mittels Transportmitteln 24 dem Ballistikseparator 14 zugeführt, mit dem die beschriebene Aufteilung in eine Schwerfraktion, also das Kunststoffgemisch, eine Leichtfraktion und eine Kleinfraktion in der beschriebenen Weise erfolgt.

Fig. 3 zeigt eine Kombination der beiden zuvor beschriebenen Verfahrensabläufe, wobei gleiche Bezugszeichen, gleich Bauteile kennzeichnen, wie sie anhand der Figuren 1 und 2 beschrieben worden sind.

Bei dem in Fig. 3 dargestellten Ausführungsbeispiel wird die Abfallfraktion zunächst der Sortiereinrichtung 22 zugeleitet, in der Metall enthaltende Objekte aussortiert werden. Mittels der Transportmittel 24 wird die so bearbeitete Abfallfraktion der Sortiereinrichtung 10 zum Aussortieren von Getränkekartons zugeleitet. Die somit auch von Getränkekartons weitgehend befreite Abfallfraktion wird dann mittels der Transportmittel 12 dem Ballistikseparator 14 zugeleitet, der eine Weiterbearbeitung der Abfallfraktion in der bereits beschriebenen Weise durchführt.

Fig. 4 zeigt die Funktionsweise des Ballistikseparators, wie er aus dem Stand der Technik bekannt ist und wie er erfindungsgemäß zum Aussortieren eines Kunststoffgemisches aus einer Abfallfraktion verwendet wird.

Der insgesamt mit 14 gekennzeichnete Ballistikseparator weist einen oder mehrere Wurfpaddel 28 auf, die unter einem Winkel a zur Horizontalen angeordnet sind und eine obere gestufte Oberfläche 30 aufweist. Eine Abstufung der Oberfläche ist nicht erforderlich, unterstützt aber den gewünschten Trenneffekt. Die zu trennende Abfallfraktion wird von oben auf das Wurfpaddel 28 aufgebracht, und gleichzeitig wird mittels der Antriebe 32 und 34 das Wurfpaddel zu einer kreisförmigen Bewegung angetrieben.

Während der Aufwärtsbewegung treffen die Abfallobjekte auf die schräg gestellten Abschnitte der Oberfläche 30 auf. Dabei werden die runden und/oder schweren Objekte derart beschleunigt, dass sie in Fig. 4 nach oben und links beschleunigt werden. Die anschließend durchlaufenden Wurfparabeln sind andeutungsweise durch die Pfeile 36 dargestellt. Somit bewegen sich diese Abfallobjekte der Abfallfraktion schrittweise in Richtung des unteren linken Endes, so dass diese als Schwerfraktion und somit als Kunststoffgemisch vom Ballistikseparator 14 abgetrennt werden. Denn insbesondere die kompakten, also runden und/oder schweren Objekte stellen die für das Kunststoffgemisch interessierenden Abfallobjekte dar. In der Schwerfraktion befinden sich dann also hauptsächlich Kunststoffobjekte, die nachfolgend einer weiteren Aussortierung in einzelne Kunststofffraktionen zugeleitet werden. Ziel ist es, einzelne, möglichst reine Kunststofffraktionen zu erhalten.

Flache und/oder leichte Abfallobjekte werden bei der Aufwärtsbewegung des Wurfpaddels 28 dagegen nur geringfügig angehoben, so dass diese während der weiteren wiederkehrenden Kreisbewegungen schrittweise zum oberen in Fig. 4 rechten Ende transportiert werden. Dies geschieht dadurch, dass sie während des oberen Abschnittes der Kreisbewegung in Richtung des oberen Endes des Wurfpaddels 28 beschleunigt werden und bei der nachfolgenden nach unten gerichteten Bewegung ein wenig von der Oberfläche 30 abheben. Während der weiteren Kreisbewegung wird der Wurfpaddel 28 weiter in Fig. 4 nach links bewegt, so dass die weichen Objekte schrittweise in Fig. 4 nach rechts transportiert werden und schließlich als Leichtfraktion vom Ballistikseparator 14 abgetrennt werden.

## Patentansprüche

1. Verfahren zum Aussortieren eines Kunststoffgemisches aus einem Abfallgemisch in einer Abfallsortieranlage, das die folgenden Schritte umfasst:
- Aussortieren einer Abfallfraktion, die Kunststoffobjekte, Getränkekartons und ggf. Metall enthaltende Abfallobjekte enthält, mittels einer oder mehrerer Sortiereinrichtungen wie Siebstufen, Windsichtern, Vibrationsrinnen oder magnetischen Einrichtungen,
- Aussortieren der Getränkekartons aus der Abfallfraktion mittels einer optischen Sortiereinrichtung für Getränkekartons und ggf. der Metall enthaltenden Abfallobjekte aus der Abfallfraktion mittels einer Sortiereinrichtung für Metall enthaltende Abfallobjekte und
- Abtrennen des Kunststoffgemisches als Schwerfraktion aus der um die Getränkekartons reduzierten Abfallfraktion mittels eines Ballistikseparators.

2. Verfahren nach Anspruch 1, bei dem sowohl Getränkekartons als auch Metall enthaltende Abfallobjekte aus der Abfallfraktion aussortiert werden,
**dadurch gekennzeichnet, dass**
das Aussortieren der Getränkekartons vor dem Aussortieren der Metall enthaltenden Abfallobjekte erfolgt.

3. Verfahren nach Anspruch 1 oder 2,
bei dem die aussortierten Getränkekartons einer weiteren Verwertung zugeführt werden.

4. Verfahren nach einem der Ansprüche 1 bis 3,
bei dem Abfallobjekte aus Verbundmaterialen aus zumindest einem Teil Metall, insbesondere Aluminium, aussortiert werden.

5. Verfahren nach einem der Ansprüche 1 bis 4,
bei dem die mittels des Ballistikseparators aussortierte Leichtfraktion einer weiteren Verwertung zugeführt wird.

6. Verfahren nach einem der Ansprüche 1 bis 5,
bei dem eine Kleinfraktion mit Hilfe des Ballistikseparators aus dem Abfallgemisch aussortiert wird.

7. Abfallsortieranlage
- mit mindestens einer Sortiereinrichtung (10), die aus einer Kunststoffobjekte sowie Getränkekartons und/oder Metall aufweisenden Abfallfraktion Getränkekartons und/oder Metall aufweisende Abfallobjekte aussortiert, wobei die Sortiereinrichtung (10) optische Mittel zum Erkennen von Getränkekartons und Austragungsmittel zum Aussortieren der Getränkekartons aufweist,
- mit Transportmitteln (12) zum Transportieren der um Getränkekartons reduzierten Abfallfraktion und/oder der um Metall aufweisende Abfallobjekte reduzierten Abfallfraktion und/oder
- mit einem Ballistikseparator (14) zum Abtrennen von Kunststoffobjekten als Schwerfraktion aus der Abfallfraktion.

8. Abfallsortieranlage nach Anspruch 7,
**dadurch gekennzeichnet,**
**dass** der Ballistikseparator (14) Wurfpaddel (28) mit einer Lochung zum Aussortieren einer Kleinfraktion aufweist.

## Claims

1. A method of sorting a plastic mixture out of a waste mixture in a waste sorting facility, which comprises the following steps:
- sorting out a waste fraction which contains plastic objects, beverage cartons, and possibly waste objects containing metal, using one or more sorting devices such as screening stages, wind sifters, vibration troughs, or magnetic devices,
- sorting out the beverage cartons from the waste fraction using an optical sorting device for beverage cartons and possibly sorting out the waste objects containing metal from the waste fraction using a sorting device for waste objects containing metal, and
- separating the plastic mixture as the heavy fraction from the waste fraction, which is reduced by the beverage cartons, using a ballistic separator.

2. The method according to Claim 1, in which both beverage cartons and waste objects containing metal are sorted out of the waste fraction,
**characterized in that** the sorting out of the beverage cartons is performed before the sorting out of the waste objects containing metal.

3. The method according to Claim 1 or 2,
wherein the beverage cartons which are sorted out are supplied to further processing.

4. The method according to one of Claims 1 through 3,
wherein waste objects made of composite materials made at least partially of metal, particularly aluminum, are sorted out.

5. The method according to one of Claims 1 through 4,
wherein the light fraction sorted out using the ballistic separator is supplied to further processing.

6. The method according to one of Claims 1 through 5,
wherein a small fraction is sorted out of the waste mixture with the aid of the ballistic separator.

7. A waste sorting facility
- having at least one sorting device (10), which sorts out beverage cartons and/or waste objects having metal from a waste fraction having plastic objects as well as beverage cartons and/or metal, the sorting device (10) having optical means for recognizing beverage cartons and discharge means for sorting out the beverage cartons,
- having transport means (12) for transporting the waste fraction reduced by beverage cartons and/or the waste fraction reduced by waste objects having metal and/or
- having a ballistic separator (14) for separating plastic objects from the waste fraction as the heavy fraction.

8. The waste sorting facility according to Claim 7,
**characterized in that**
the ballistic separator (14) has ejection paddles (28) having a perforation for sorting out a small fraction.

## Revendications

1. Procédé de tri d'un mélange de matières plastiques à partir d'un mélange de déchets dans une installation de tri de déchets, comprenant les étapes suivantes consistant à :
- trier une fraction de déchets comprenant des objets de déchets comprenant des objets en matière plastique, des cartons à boissons et éventuellement du métal, au moyen d'un
ou de plusieurs dispositifs de tri, comme des étages de tamis, des aéro-séparateurs, des goulottes vibratoires ou des dispositifs magnétiques ;
- trier les cartons à boissons à partir de la fraction de déchets au moyen d'un dispositif de tri optique pour cartons à boissons et éventuellement les objets de déchets comprenant du métal au moyen d'un dispositif de tri pour objets de déchets comprenant du métal ; et
- séparer le mélange de matières plastiques sous forme de fraction lourde de la fraction de déchets moins les cartons à boissons au moyen d'un séparateur balistique.

2. Procédé selon la revendication 1, dans lequel des objets de déchets comprenant aussi bien des cartons à boissons que du métal sont triés à partir de la fraction de déchets, **caractérisé en ce que** le tri des cartons à boissons est effectué avant le tri des objets de déchets comprenant du métal.

3. Procédé selon la revendication 1 ou 2, dans lequel les cartons à boissons triés sont amenés à une récupération.

4. Procédé selon l'une quelconque des revendications 1 à 3, dans lequel on trie des objets de déchets composés de matériaux composites composés au moins en partie de métal, en particulier d'aluminium.

5. Procédé selon l'une quelconque des revendications 1 à 4, dans lequel la fraction légère triée au moyen du séparateur balistique est amenée à une récupération.

6. Procédé selon l'une quelconque des revendications 1 à 5, dans lequel une petite fraction est triée à l'aide du séparateur balistique à partir du mélange de déchets.

7. Installation de tri de déchets, comprenant
- au moins un dispositif de tri (10) qui trie à partir d'une fraction de déchets présentant des objets en matière plastique ainsi que des cartons à boissons et/ou du métal des objets de déchets présentant des cartons à boissons et/ou du métal, le dispositif de tri (10) présentant des moyens optiques pour détecter des cartons à boissons et des moyens d'évacuation pour trier les cartons à boissons,
- des moyens de transport (12) pour transporter la fraction de déchets moins les cartons à boissons et/ou la fraction de déchets moins les objets de déchets présentant du métal, et/ou
- un séparateur balistique (14) pour séparer des objets en matière plastique sous forme de fraction lourde à partir de la fraction de déchets.

8. Installation de tri de déchets selon la revendication 7, **caractérisée en ce que** le séparateur balistique (14) présente des palettes d'éjection (28) avec une perforation pour le tri d'une petite fraction.
